# EUROPÄISCHE PATENTANMELDUNG

(11) **EP 4 653 353 A1**
(43) Veröffentlichungstag der Anmeldung: **26.11.2025**
(21) Anmeldenummer: 25173272.3
(22) Anmeldetag: 29.04.2025
(51) Int. Cl.: B65G 47/86, B65G 47/90

(54) **BEHÄLTERGREIFER UND BEHÄLTERBEHANDLUNGSANLAGE**

(30) Priorität: 21.05.2024 DE 102024114120
(71) Anmelder: KHS GmbH, 44143 Dortmund (DE)
(72) Erfinder: Fahldieck, Andreas, 44143 Dortmund (DE); Schug, Nils, 44143 Dortmund (DE); Wolf, Uwe, 44143 Dortmund (DE); Klatt, Dieter, 44143 Dortmund (DE)

(57) **Zusammenfassung**

Die Erfindung betrifft einen Behältergreifer (1), insbesondere zum Transport von Behältern (2) und/oder zum Anordnen an einem Behältertransportstern, sowie eine Behälterbehandlungsanlage, insbesondere eine Behälterfüllanlage. Erfindungsgemäß ist vorgesehen, dass der Behältergreifer wenigstes einen, bevorzugt zwei Greiferfinger (3b) zum Halten eines zu transportierenden Behälters (2), wenigstens jeweils einen Lagerbolzen (4) für jeden Greiferfinger (3b) zur verschwenkbaren Lagerung jedes Greiferfingers (3b) zwischen einer Greifposition zum Halten eines Behälters (2) und einer Freigabeposition zur Abgabe oder zur Aufnahme eines Behälters (2), ein ortsfest in Bezug zu dem oder den Lagerbolzen (4) angeordnetes Höhenführungselement (5) sowie jeweils ein an jedem Greiferfinger (3b) festgelegtes Höhenzentrierelement (6b) aufweist, wobei das Höhenführungselement (5) und das oder die Höhenzentrierelemente (6b) wenigstens im Bereich der Greifposition des oder der Greiferfinger (3b) derart führend zusammenwirken, dass ein Höhenspiel des Greiferfingers (3b) begrenzt wird.

## Beschreibung

Die Erfindung betrifft einen Behältergreifer, insbesondere zum Transport von Behältern und/oder zum Anordnen an einem rotierenden Behältertransportstern, sowie eine Behälterbehandlungsanlage, insbesondere eine Behälterfüllanlage.

Aus dem Stand der Technik sind Behältergreifer, insbesondere zum Transport von Flaschen oder anderen Behältern in Behälterbehandlungsanlagen oder Behälterfüllanlagen, in vielfältiger Ausgestaltung bekannt. Insbesondere werden dabei Behältergreifer zum Halten und Transportieren von leeren wie gefüllten PET-Flaschen oder entsprechenden Vorformlingen (Preforms) mittels eines rotierenden Behältertransportsterns verwendet.

Dabei ist eine Lagerung eines verschwenkbaren Greiferfingers eines Behältergreifers grundsätzlich spielbehaftet. Dieses Lagerspiel führt zu einem Höhenspiel des oder der Greiferfinger, insbesondere bei großem Abstand zur Position der Lagerung, wie am vorderen Ende des Greiferfingers in einem Greifbereich zum Erfassen, Halten und Transportieren eines Behälters.

Bei der Gestaltung solcher Behältergreifer muss jedoch sichergestellt werden, dass der Behältergreifer den Behälter sicher und stabil erfasst, was gerade bei PET-Flaschen typischerweise im Bereich der nur sehr dünnen Sicherungsringnut oder Neckringnut erfolgt und eine entsprechend hohe Präzision erfordert. Um dies zu erreichen, muss der Behältergreifer an einer Transportvorrichtung in einer möglichst genauen Position und Ausrichtung angeordnet werden und möglichst winkelstabil festgelegt sein, um eine zuverlässige Übergabe eines Behälters an dem Behältergreifer, insbesondere bei hohen Transportgeschwindigkeiten von über 60.000 Behältern pro Stunde und bis zu 90.000 Behälter pro Stunde, zu ermöglichen.

Der Erfindung liegt die Aufgabe zugrunde, einen Behältergreifer sowie eine Behälterbehandlungsanlage mit wenigstens einem Behältergreifer bereitzustellen, wobei der Behältergreifer den Behälter besonders präzise und mit geringem Höhenspiel aufnehmen kann.

Die Aufgabe wird erfindungsgemäß durch einen Behältergreifer gemäß Anspruch 1 sowie durch eine Behälterbehandlungsanlage gemäß Anspruch 14 gelöst. Vorteilhafte Weiterbildungen der Erfindung sind in den abhängigen Ansprüchen angegeben.

Der erfindungsgemäße Behältergreifer, insbesondere zum Transport von Behältern und/oder zum Anordnen an einem rotierenden Behältertransportstern, weist wenigstens einen und bevorzugt zwei Greiferfinger zum Halten eines zu transportierenden Behälters, wenigstens einen Lagerbolzen und bevorzugt jeweils einen Lagerbolzen für einen Greiferfinger zur verschwenkbaren Lagerung des oder der Greiferfinger zwischen einer Greifposition zum Halten eines Behälters und einer Freigabeposition zur Abgabe oder zur Aufnahme eines Behälters, ein ortsfest in Bezug zu dem oder den Lagerbolzen angeordnetes Höhenführungselement sowie ein an jedem Greiferfinger festgelegtes Höhenzentrierelement auf, wobei das Höhenführungselement und die Höhenzentrierelemente wenigstens im Bereich der Greifposition des oder der Greiferfinger derart führend zusammenwirken, dass ein Höhenspiel des oder der Greiferfinger in Bezug zueinander und/oder zweier Greiferfinger gemeinsam entlang der Höhe, insbesondere entlang der Richtung des Lagerbolzens, reduziert bzw. begrenzt wird.

Die erfindungsgemäße Behälterbehandlungsanlage, insbesondere Behälterfüllanlage, weist wenigstens eine Transportvorrichtung, insbesondere wenigstens einen Behältertransportstern, sowie mehrere, an der Transportvorrichtung und insbesondere an einem Rahmenbauteil der Transportvorrichtung festgelegte, erfindungsgemäße Behältergreifer auf, wobei jeweils ein Höhenführungselement eines Behältergreifers an der Transportvorrichtung und bevorzugt unmittelbar an dem Rahmenbauteil festgelegt ist.

Die Erfinder haben erkannt, dass durch ein Zusammenwirken eines Höhenführungselements mit einem Höhenzentrierelement jedes Greiferfingers in einfacher Weise eine Höhenzentrierung, d.h. eine Begrenzung bzw. eine Minimierung des Höhenspiels in beide Richtungen der Höhe, also sowohl zur Unterseite als auch zur Oberseite, erreicht werden kann. Entsprechend ist der Behältergreifer selbst für sehr flache Behältermündungen, die entsprechend schmale Greifnuten haben, problemlos geeignet. Dabei ist dies mit einem einfachen Aufbau mit nur wenigen Bauteilen möglich, sodass der Behältergreifer kostengünstig herzustellen und mit hoher Ausfallsicherheit zu betreiben ist. Zudem kann eine offene Bauweise erreicht werden, sodass der Behältergreifer einfach und sehr gut zu reinigen ist. Zudem ist auch ein einfacher und schneller Zugriff auf Verschleißteile und ein entsprechend schneller Austausch von Bauteilen nach einem Defekt möglich, sodass Betriebsunterbrechungen deutlich reduziert werden können. Schließlich erlaubt die einfache Konstruktion auch eine gute Nachrüstbarkeit bereits bestehender Transportvorrichtungen mit Behältergreifern.

Ein Behältergreifer im Sinne der Erfindung ist grundsätzlich eine Vorrichtung, die gebildet ist, einen einzelnen Behälter mittels wenigstens eines Greiferfingers und bevorzugt zwischen zwei Greiferfingern aufzunehmen und/oder zu halten. Dabei ist der Behältergreifer insbesondere zum Greifen und zum Halten eines Behälters während eines Transports, bevorzugt im Bereich eines Sicherungsrings und besonders bevorzugt einer Sicherungsringnut und/oder bevorzugt im Bereich eines Neckrings und besonders bevorzugt einer Neckringnut, gebildet. Entsprechende Behältergreifer zum Halten eines Behälters werden gängig auch als Behälterklammern bzw. als Flaschenklammern bezeichnet. Ebenfalls bevorzugt ist der Behältergreifer für eine Verwendung an einer Behältertransportvorrichtung und/oder an einer Behälterbehandlungsanlage mit einem Behälterdurchsatz von wenigstens 60.000 Behältern pro Stunde, besonders bevorzugt von wenigstens 75.000 Behältern pro Stunde und ganz besonders bevorzugt von wenigstens 90.000 Behältern pro Stunde gebildet.

Die Behälter sind bevorzugt Flaschen, besonders bevorzugt Kunststoffflaschen und ganz besonders bevorzugt PET-Flaschen. Grundsätzlich kann es sich aber auch um beliebige andere Behälter oder Preforms für Behälter handeln. Obwohl der Behältergreifer Behälter mit einem beliebigen Inhalt halten kann und entsprechend eine Anwendung in jedem technischen Gebiet denkbar ist, ist es bevorzugt, dass der Behälter zur Aufnahme einer Flüssigkeit, besonders bevorzugt eines Nahrungsmittels und ganz besonders bevorzugt eines Getränks vorgesehen ist. Dabei kann der Behältergreifer sowohl zum Halten gefüllter, als auch leerer Behälter, insbesondere Flaschen, vorgesehen sein, wobei gerade bei vollen Flaschen ein aufstehender oder gestützter Transport von in dem Greifer aufgenommenen und/oder mittels des Behältergreifers geführten Behältern bevorzugt wird.

Erfindungsgemäß weist der Behältergreifer wenigstens einen, bevorzugt wenigstens zwei Greiferfinger und besonders bevorzugt genau zwei Greiferfinger zum Halten eines zu transportierenden Behälters auf. Dabei erstreckt sich jeder Greiferfinger bevorzugt in einer radialen Richtung zu einer Mittellängsachse eines Lagerbolzens zur verschwenkbaren Anordnung des Greiferfingers. Um einen Behälter halten zu können, sind bevorzugt zwei Greiferfinger sich gegenüberliegend angeordnet und weisen dabei bevorzugt eine zueinander identische Länge auf. Besonders bevorzugt sind die beiden Greiferfinger spiegelsymmetrisch zueinander gebildet und/oder angeordnet. Ebenfalls bevorzugt erstreckt sich ein Greiferfinger im Wesentlichen linear, insbesondere in einem Bereich zwischen dem Lagerbolzen und einem Greifbereich zum Halten eines Behälters. Daneben ist aber grundsätzlich auch ein gekrümmter, gebogener oder gewinkelter Verlauf eines Greiferfingers denkbar. Insbesondere verlaufen die beiden Greiferfinger zur Spitze bzw. zum Greifbereich aufeinander zu.

Jeder Greiferfinger weist am vorderen Ende einen Greifbereich auf. Dabei ist der Greifarm bevorzugt wenigstens im Greifbereich derart dünn gebildet, dass damit ein Behälter, insbesondere eine Kunststoffflasche, im Bereich einer sehr schmalen Mündung und/oder in einem Bereich zwischen einem Neckring und dem Verschluss bzw. eines Gewindeauslaufs gegriffen werden kann. Aufgrund dieses besonders dünnen Bereichs zum Greifen des Behälters ist eine präzise Positionierung des Behältergreifers notwendig, da ein zuverlässiges Greifen nur bei einem sehr geringen Höhenschlag möglich ist. Der Greifbereich ist zunächst lediglich ein Abschnitt des Greiferfingers, in dem der Behälter gehalten wird. Dabei kann der Behälter im Greifbereich unmittelbar von dem Greiferfinger gehalten werden oder es erfolgt ein mittelbares Halten mittels eines im Greifbereich angeordneten, eine Greiffläche aufweisenden Bauteils, beispielsweise eines Passstücks.

Der oder die Greiferfinger können grundsätzlich aus einem beliebigen Material gebildet sein, wobei eine Gestaltung aus Kunststoff, einem faserverstärkten Kunststoff, einem faserverstärkten Verbundwerkstoff und/oder aus Metall, insbesondere aus Edelstahl, bevorzugt ist. Besonders bevorzugt ist ein Greiferfinger im Wesentlichen aus genau einem Material gebildet. Um das Gewicht eines Greiferfingers und entsprechend dessen Trägheitsmoment so gering wie möglich zu halten, weist der Greiferfinger bevorzugt in einem mittleren und/oder inneren Bereich Materialausnehmungen auf.

Der Greiferfinger weist bevorzugt eine Bohrung und/oder eine Hülse zum Anordnen des Greiferfingers an dem Lagerbolzen auf, wobei eine hochgenaue Lagerung des Greiferfingers an dem Lagerbolzen bevorzugt wird. Dabei ist ein Lagerbolzen zur verschwenkbaren Lagerung wenigstens eines und bevorzugt genau eines Greiferfingers vorgesehen. Grundsätzlich können also zwei Greiferfinger an einem einzigen, gemeinsamen Lagerbolzen verschwenkbar angeordnet sein, wobei bevorzugt jeder Greiferfinger an einem eigenen Lagerbolzen angeordnet ist.

Der oder die Lagerbolzen sind bevorzugt zur verschwenkbaren Lagerung eines oder beider Greiferfinger an einem Maschinengestell, einem Maschinenrahmen und/oder einem Behältertransportstern vorgesehen. Bei einer Gestaltung des Behältergreifers mit einem Lagerbolzen für jeden Greiferfinger sind die beiden Lagerbolzen bevorzugt parallel zueinander angeordnet und/oder erstrecken sich über die gleiche Länge und/oder sind auf einer gemeinsamen Höhe festgelegt. Besonders bevorzugt sind die beiden Lagerbolzen zueinander identisch gebildet. Weiterhin besonders bevorzugt sind die beiden Lagerbolzen zueinander spiegelsymmetrisch zu einer Mitte des Behältergreifers, insbesondere zwischen den beiden Greiferfingern, angeordnet und ganz besonders bevorzugt sind die beiden Greiferfinger spiegelsymmetrisch zueinander an dem jeweiligen Lagerbolzen festgelegt.

Unter der Greifposition wird eine Position des oder der Greiferfinger zum Halten eines Behälters verstanden, sodass in der Greifposition der Greiferfinger und bevorzugt beide Greiferfinger im Kontakt zu dem gehaltenen Behälter sind. Die beiden Greiferfinger können über den gesamten Weg zwischen der Greifposition und der Freigabeposition symmetrisch zueinander und/oder jeweils um den gleichen Winkel in Bezug zu einer Mittellängsachse zwischen den beiden Greiferfingern, insbesondere der Mittellängsachse in der Greifposition, verschwenken. Gerade bei einem Einschieben eines Behälters zwischen die Greiferfinger entlang einer Kreisbahn kann aber auch ein asymmetrisches und/oder unterschiedliches Verschwenken der beiden Greiferfinger, insbesondere in Bezug auf die Mittellängsachse, erfolgen. Besonders bevorzugt ist der gesamte Behältergreifer spiegelsymmetrisch, insbesondere zu einer Mittellängsachse zwischen den beiden Greiferfingern, gebildet.

Die Freigabeposition ist dagegen eine Position des wenigstens einen, bevorzugt beider Greiferfinger zur Abgabe oder zur Aufnahme eines Behälters, wobei bevorzugt der Abstand beider Greiferfinger, wenigstens im Greifbereich, in der Freigabeposition größer ist als in der Greifposition. **In** der Freigabeposition kann aber ebenfalls, insbesondere während des Aufnehmens und/oder des Abgebens eines gehaltenen Behälters, ein Kontakt zu dem Behälter bestehen, was insbesondere bei passiven Greifern der Fall ist.

Erfindungsgemäß ist ein ortsfest in Bezug zu dem oder den Lagerbolzen, insbesondere ortsfest in Bezug zu einer Mittellängsachse des jeweiligen Lagerbolzens, angeordnetes Höhenführungselement vorgesehen, um eine Reduzierung und/oder Begrenzung des Höhenspiels jedes Greiferfingers zu erreichen. Das Höhenführungselement wirkt dabei mit dem Behältergreifer und dort mit dem oder den Höhenzentrierelementen zusammen, wobei das Höhenführungselement bevorzugt nicht unmittelbar an dem Behältergreifer angeordnet ist und/oder gegenüber dem gleichen Bauteil, insbesondere einem Maschinenrahmen oder einem Transportstern, festgelegt ist, wie der Behältergreifer. Entsprechend liegt bevorzugt eine mittelbare Festlegung des Höhenführungselements und des Behältergreifers in Bezug zueinander vor. Die ortsfeste Anordnung des Höhenführungselements erfolgt bevorzugt entlang einer Mittellängsachse zwischen den beiden Greiferfingern des Behältergreifers und/oder mittig zwischen den beiden Greiferfingern. Weiterhin bevorzugt ist das Höhenführungselement, insbesondere entlang einer Mittellängsachse zwischen den beiden Greiferfingern, näher an dem oder den Lagerbolzen der Greiferfinger angeordnet als die Höhenzentrierelemente.

Das Festlegen des Höhenführungselements an einer Transportvorrichtung und insbesondere an einem Behältertransportstern, erfolgt bevorzugt im äußeren Randbereich bzw. im Bereich des Randes einer Oberfläche des Halterahmens bzw. einer Sternplatte. Generell ist das Rahmenbauteil bevorzugt eine Sternplatte eines Behältertransportsterns. Ebenfalls bevorzugt erfolgt das Festlegen des Höhenführungselements an demselben Bauteil, an dem auch der oder die Lagerbolzen des oder der Greiferfinger festgelegt sind, wobei das Höhenführungselement gegenüber dem oder den Lagerbolzen bevorzugt randständiger bzw. näher am Rand des Bauteils angeordnet ist.

An jedem der Greiferfinger ist erfindungsgemäß ein Höhenzentrierelement festgelegt. Das Höhenzentrierelement kann grundsätzlich aus einem beliebigen Material gebildet sein. Bevorzugt ist dieses aber aus Metall, insbesondere Stahl oder Edelstahl, gebildet und stellt somit kein Verschleißteil dar. Insbesondere in Kombination damit ist das Höhenführungselement bevorzugt aus Kunststoff gebildet, sodass gegebenenfalls auftretender Verschleiß dieses Kunststoffbauteil betrifft und ein Austausch hier in einfacher Weise die volle Funktionsfähigkeit wieder herstellen kann. Grundsätzlich ist aber auch denkbar, dass das Höhenzentrierelement aus Kunststoff und das Höhenführungselement aus Metall, insbesondere Stahl oder Edelstahl, gebildet ist. Darüber hinaus können beide Bauteile auch aus dem gleichen Material, insbesondere aus Kunststoff oder Metall, Stahl oder Edelstahl gebildet sein. Als Kunststoff ist insbesondere PEEK oder PA12 vorteilhaft. Generell kann auch das Höhenzentrierelement und/oder das Höhenführungselement aus einer Keramik gebildet sein.

Um den erfindungsgemäßen Effekt einer Reduzierung und/oder Begrenzung eines Höhenspiels des oder der Greiferfinger zu erreichen, wirken das Höhenführungselement und die Höhenzentrierelemente wenigstens im Bereich der Greifposition des oder der Greiferfinger zusammen, wobei eine Höhenführung des oder der Greiferfinger erreicht wird. Unter einem Begrenzen des Höhenspiels wird bevorzugt ein Begrenzen der Bewegbarkeit jedes Greiferfingers in der Höhe und dabei besonders bevorzugt in beide Richtungen der Höhe, d.h. in eine Richtung abwärts sowie aufwärts verstanden. Die mit dem Höhenführungselement zusammenwirkenden und das Höhenspiel begrenzenden Höhenzentrierelemente stellen somit eine zusätzliche Höhenführung bzw. Festlegung hinsichtlich der Höhe und/oder der Neigung jedes Greiferfingers zu einer bereits bestehenden Festlegung durch einen die Drehachse des Greiferfingers bildenden Lagerbolzen dar.

Bei einer vorteilhaften Weiterbildung des erfindungsgemäßen Behältergreifers wirken das Höhenführungselement und die Höhenzentrierelemente formschlüssig wenigstens in der Richtung der Höhe und bevorzugt ausschließlich in Richtung der Höhe zusammen. Die Höhe ist dabei grundsätzlich die Richtung entlang der Mittellängsachse der Lagerbolzen und/oder entlang der Mittellängsachse eines im Behältergreifer gehaltenen Behälters und/oder senkrecht zur Verschwenkebene des oder der Greiferfinger. Weiterhin ist bevorzugt, dass das Höhenführungselement und die Höhenzentrierelemente aneinander und/oder ineinander in der Verschwenkebene des Greiferfingers bzw. entlang der Bewegungsbahn des Greiferfingers zwischen der Freigabeposition und der Greifposition frei zueinander bewegbar sind.

Obwohl ein formschlüssiges Zusammenwirken des Höhenführungselements mit jedem der beiden Höhenzentrierelemente beliebig erreicht werden kann, ist eine Weiterbildung des erfindungsgemäßen Behältergreifers bevorzugt, bei der das Höhenführungselement eine Führungsnut aufweist, innerhalb der ein Führungsabschnitt des Höhenzentrierelements jedes der Greiferfinger, wenigstens in der Greifposition, angeordnet bzw. geführt ist. Bevorzugt liegt der Führungsabschnitt des Höhenführungselements beidseitig, insbesondere nach oben sowie nach unten bzw. in einer Richtung auf den oder die Greiferfinger zuweisend sowie dem gegenüberliegend, davon wegweisend, an einer Oberfläche innerhalb der Führungsnut bzw. an den Seitenflächen der Führungsnut an. Alternativ kann bevorzugt sein, dass der Führungsabschnitt jeweils mit einem geringen Höhenspiel innerhalb der Führungsnut aufgenommen wird, um ein Verschwenken des Greiferfingers nicht zu hemmen. Darüber hinaus ist aber auch eine Ausführung denkbar, bei der die beiden Höhenzentrierelemente jeweils eine Führungsnut aufweisen, insbesondere eine Führungsnut in einer gleichen Höhe und/oder innerhalb einer gemeinsamen Ebene, und ein Führungsabschnitt des Höhenführungselements sich wenigstens im Bereich der Greifposition innerhalb dieser Führungsnut befindet.

Grundsätzlich kann das Höhenzentrierelement beliebig, insbesondere mittelbar oder unmittelbar, an dem jeweiligen Greiferfinger angeordnet sein, wobei das Höhenzentrierelement und insbesondere ein mit dem Höhenführungselement zusammenwirkender Abschnitt des Höhenzentrierelements bevorzugt von einer Oberfläche des Greiferfingers beabstandet angeordnet ist. Eine bevorzugte Ausgestaltung des erfindungsgemäßen Behältergreifers sieht jedoch vor, dass das Höhenführungselement an einem Bolzenkörper zum beabstandeten Festlegen, insbesondere an einem Rahmenbauteil einer Transportvorrichtung, und/oder das Höhenzentrierelement an einem Haltebolzen zum beabstandeten Festlegen an einem Greiferfinger angeordnet ist, wobei das Höhenführungselement am Bolzenkörper und/oder das Höhenzentrierelement am Haltebolzen bevorzugt rotierbar angeordnet ist. Alternativ kann auch das Höhenzentrierelement jeweils rotierbar angeordnet sein. Der Bolzenkörper und/oder die Haltebolzen sind bevorzugt parallel zu dem oder den Lagerbolzen des oder der Greiferfinger angeordnet.

Das Höhenführungselement ist bevorzugt an dem auf den oder die Greiferfinger zuweisenden Ende des Bolzenkörpers angeordnet und/oder bildet den Endabschnitt des Bolzenkörpers. Generell kann das Höhenführungselement sowohl einstückig mit dem Bolzenkörper gebildet sein als auch daran als separates Bauteil festgelegt sein. Bevorzugt ist das Höhenführungselement lösbar und besonders bevorzugt austauschbar am Bolzenkörper festgelegt, um ein verschlissenes Höhenführungselement besonders einfach erneuern zu können. Zusätzlich oder alternativ ist das Höhenzentrierelement bevorzugt an dem auf das Höhenführungselement zuweisenden und/oder dem von dem Greiferfinger wegweisenden Ende des Haltebolzens angeordnet und/oder bildet den Endabschnitt des Haltebolzens. Generell kann das Höhenzentrierelement sowohl einstückig mit dem Haltebolzen gebildet sein als auch daran als separates Bauteil festgelegt sein. Bevorzugt ist das Höhenzentrierelement lösbar und besonders bevorzugt austauschbar am Haltebolzen festgelegt, um ein verschlissenes Höhenzentrierelement besonders einfach erneuern zu können.

Auch das Höhenführungselement und/oder das Höhenzentrierelement können grundsätzlich, insbesondere hinsichtlich ihrer Umfangsrichtung, beliebig gebildet sein, wobei es jedoch bevorzugt ist, dass das Höhenführungselement und/oder das Höhenzentrierelement als Kreisscheibe oder als Kreisscheibenausschnitt gebildet ist und besonders bevorzugt einen größeren Durchmesser als der Bolzenkörper bzw. der Haltebolzen aufweist und/oder sich bevorzugt über wenigstens 90°, besonders bevorzugt wenigstens 120° und ganz besonders bevorzugt über wenigstens 180° des Umfangs erstreckt. Dabei erstreckt sich das als Kreisscheibe gebildete Höhenführungselement und/oder Höhenzentrierelement grundsätzlich über 360° und ist bevorzugt rotationssymmetrisch gebildet. Ebenfalls bevorzugt erstreckt sich die Führungsnut und/oder der Führungsabschnitt dabei ebenfalls über den gesamten Umfang, d.h. über 360°. Grundsätzlich ist aber auch denkbar, dass das Höhenführungselement und/oder das Höhenzentrierelement als Kreisscheibe gebildet ist, jedoch sich die Führungsnut und/oder der Führungsabschnitt lediglich über einen Teil des Umfangs erstreckt. Bevorzugt ist dabei eine Erstreckung über wenigstens 90°, besonders bevorzugt wenigstens 120° und ganz besonders bevorzugt über wenigstens 180° des Umfangs des Höhenführungselements und/oder des Höhenzentrierelements. Bei einem größeren Durchmesser des Höhenführungselements gegenüber dem Bolzenkörper und/oder einem größeren Durchmesser des Höhenzentrierelements gegenüber dem Haltebolzen ist die jeweilige Baugruppe somit pilzförmig gebildet und/oder weist als äußerste Oberfläche, insbesondere in radialer Richtung, eine Oberfläche des Höhenführungselements bzw. des Höhenzentrierelements auf. Grundsätzlich kann das Höhenführungselement und/oder das Höhenzentrierelement nicht nur als Kreisscheibe, sondern auch mit einer rechteckigen, quadratischen oder ungleichmäßigen Kontur gebildet sein.

Zudem ist bevorzugt, dass die beiden Höhenzentrierelemente, insbesondere über die gesamte Bewegungsbahn des jeweiligen Greiferfingers zwischen der Greifposition und der Freigabeposition, zueinander parallel und/oder die beiden Höhenzentrierelemente und bevorzugt auch das Höhenführungselement und besonders bevorzugt die Führungsnut des Höhenführungselements in einer gemeinsamen Ebene angeordnet sind. Weiterhin bevorzugt erstrecken sich das Höhenführungselement und insbesondere die Führungsnut des Höhenführungselements und die Höhenzentrierelemente und insbesondere die Führungsabschnitte der Höhenzentrierelemente in einer gemeinsamen Ebene, die ganz besonders bevorzugt parallel zu einer Oberfläche des oder der Greiferfinger und/oder rechtwinklig zu dem oder den Lagerbolzen verläuft.

Das Zusammenwirken des Höhenführungselements und der beiden Höhenzentrierelemente erfolgt wenigstens in der Greifposition des oder der Greiferfinger. Bei einer bevorzugten Ausgestaltung des erfindungsgemäßen Behältergreifers sind das Höhenführungselement und die beiden Höhenzentrierelemente jedoch derart angeordnet und/oder derart gebildet, dass zwischen einer Greifposition und/oder einer parallelen Anordnung der beiden Greiferfinger zueinander und einer Verschwenkung des oder der Greiferfinger auf die Freigabeposition zu von wenigstens 2°, bevorzugt wenigstens 5°, besonders bevorzugt wenigstens 10° und ganz besonders bevorzugt wenigstens 15° durchgängig ein Kontakt zwischen dem Höhenführungselement und jedem der beiden Höhenzentrierelemente besteht. Ebenfalls bevorzugt besteht ein Kontakt zwischen dem Höhenführungselement und den beiden Höhenzentrierelementen über wenigstens 10 %, besonders bevorzugt wenigstens 15 %, ganz besonders bevorzugt wenigstens 25 % und insbesondere bevorzugt 50 % des Weges von einer Greifposition bzw. einer parallelen Anordnung der beiden Greiferfinger zueinander zu einer Freigabeposition und/oder einem maximalen Öffnungswinkel der beiden Greiferfinger zueinander. Generell ist aber auch eine Gestaltung denkbar, bei der die beiden Greiferfinger über den gesamten Weg zwischen einer Greifposition und einer Freigabeposition durch das Höhenführungselement und die beiden Höhenzentrierelemente geführt sind. Eine solche Erstreckung des Kontaktbereichs auf wenigstens einen Teil des möglichen Verschwenkweges der Greiferfinger hat zum einen den Vorteil, dass eine Winkel- und/oder Höhenabweichung der Greiferfinger bereits deutlich vor dem Kontakt mit einem zu haltenden Behälter verhindert wird und zum anderen mit einem Greifer ohne eine Anpassung des Höhenführungselements und/oder der Höhenzentrierelemente ein Formatwechsel zu einem anderen Behälter und insbesondere zu einem anderen Behälter mit einem abweichenden, zu greifenden Durchmesser problemlos möglich ist.

Weiterhin bevorzugt sind die beiden Greiferfinger in der Greifposition zum Halten eines Behälters im Wesentlichen parallel zueinander angeordnet bzw. weichen von einer parallelen Anordnung zueinander bevorzugt um nicht mehr als 10°, besonders bevorzugt um nicht mehr als 5°, ganz besonders bevorzugt um nicht mehr als 2° und insbesondere bevorzugt um nicht mehr als 1° ab.

Eine bevorzugte Weiterbildung des erfindungsgemäßen Behältergreifers sieht vor, dass das Höhenzentrierelement bzw. der Haltebolzen im Bereich der Mitte des Greiferfingers, insbesondere im Wesentlichen mittig zwischen dem Lagerbolzen und einem Greifbereich des Greiferfingers zum Halten eines Behälters, angeordnet ist. Entsprechend ist es bevorzugt, dass die Höhenzentrierelemente beider Greiferfinger jeweils in gleichem Abstand zu dem Lagerbolzen des jeweiligen Greiferfingers angeordnet sind. Bei einer solchen Anordnung im Bereich der Mitte des Greiferfingers weicht die Position der Anordnung des Höhenzentrierelements bzw. des Haltebolzens von der Mitte entlang der Länge des Greiferfingers und/oder von der Mitte zwischen dem jeweiligen Lagerbolzen und dem Greifbereich des Greiferfingers bevorzugt um nicht mehr als 25 %, besonders bevorzugt um nicht mehr als 15 % und ganz besonders bevorzugt um nicht mehr als 5 % der Länge des Greiferfingers bzw. des Abstandes zwischen dem Lagerbolzen und dem Greifbereich ab.

Das Festlegen der Höhenzentrierelemente an dem jeweiligen Greiferfinger kann grundsätzlich in beliebiger Weise erfolgen, wobei bevorzugt ein Einstellen der genauen Positionierung des Höhenzentrierelements möglich ist. Dazu ist bei einer vorteilhaften Weiterbildung des erfindungsgemäßen Behältergreifers das Höhenzentrierelement innerhalb eines Langlochs in dem Greiferfinger festgelegt, wobei das Langloch besonders bevorzugt radial oder tangential zu einem Drehpunkt des Greiferfingers um den Lagerbolzen oder winklig, insbesondere rechtwinklig, zur Längsrichtung des Greiferfingers angeordnet ist. Dabei ist die Längsrichtung des Greiferfingers bevorzugt die Richtung entlang einer Mittellängsachse des Greiferfingers und/oder die Richtung entlang einer Geraden zwischen dem Lagerbolzen und dem Greifbereich zum Halten eines Behälters.

Zudem ist, insbesondere bei einer Gestaltung des Behältergreifers als passivem Greifer, bevorzugt, dass an dem einen Greiferfinger oder zwischen den beiden Greiferfingern ein auf die Greifstellung vorspannendes Federelement vorgesehen ist, das besonders bevorzugt an dem Greiferfinger jeweils gegenüberliegend zum Höhenzentrierelement angeordnet ist. Unter einer gegenüberliegenden Anordnung wird verstanden, dass das Federelement und insbesondere eine Federaufnahme bzw. ein Federhaltebolzen an einer dem Höhenzentrierelement und insbesondere dem Haltebolzen gegenüberliegenden Seite des Greiferfingers angeordnet ist, wobei sich besonders bevorzugt der Federhaltebolzen und der Haltebolzen des Höhenzentrierelements entlang einer gemeinsamen Achse auf beiden Seiten des Greiferfingers erstrecken. Zudem ist bevorzugt, dass das Höhenzentrierelement und die Position der Festlegung des Federelements einen gleichen Abstand zum Lagerbolzen und/oder zum Greifbereich aufweisen.

Das Federelement wirkt dabei bevorzugt unmittelbar zwischen den Greiferfingern und/oder auf den oder die Greiferfinger. Das Federelement ist zudem bevorzugt unmittelbar an jedem Greiferfinger und/oder an einer Federaufnahme des Greiferfingers, insbesondere an einem Federhaltebolzen des Greiferfingers, angeordnet. Weiterhin bevorzugt ist das Federelement ausschließlich an den Greiferfingern angeordnet. Ebenfalls bevorzugt ist das Federelement jeweils genau an einer Position des Greiferfingers angeordnet. Schließlich ist bevorzugt, dass der Behältergreifer genau ein einziges, auf eine geschlossene Stellung bzw. auf die Greifposition vorspannendes Federelement aufweist. Das Federelement kann weiterhin grundsätzlich beliebig gestaltet sein, wobei das Federelement bevorzugt eine Spiralfeder ist und/oder aus Metall gebildet ist.

Bei einer bevorzugten Ausgestaltung ist der Behältergreifer ein passiver Greifer, der besonders bevorzugt ausschließlich durch ein Hineinbewegen, insbesondere Hineindrücken, und/oder Herausbewegen, insbesondere Herausziehen, eines zu transportierenden Behälters geöffnet wird. Alternativ kann der Behältergreifer aber auch ein aktiver Greifer sein, der dabei bevorzugt mittels eines Aktuators und/oder durch ein Steuermittel, insbesondere eine Steuerkurve, angesteuert geöffnet und/oder geschlossen wird. Insbesondere bevorzugt wird ein Öffnen und/oder Schließen eines aktiven Greifers nicht durch einen Kontakt mit einem Behälter und/oder nicht durch eine Krafteinwirkung durch den Behälter bewirkt. Bei einem passiven Greifer ist dies dagegen bevorzugt der Fall.

Um eine besonders präzise Höhenführung des oder der Greiferfinger zu erreichen, ist das Höhenführungselement bevorzugt höhenverstellbar gebildet. Die Höhenverstellung des Höhenführungselements kann dabei sowohl mittels einer Höhenverstelleinrichtung des Höhenführungselements, insbesondere im Bereich des Bolzenkörpers, erfolgen. Alternativ oder zusätzlich kann eine Höhenverstellung bzw. eine Anpassung der Höhe auf die Position oder die Ebene der Höhenzentrierelemente des oder der Greiferfinger auch mittels einer oder mehrerer Beilagscheiben und/oder mittels eines oder mehrerer anderer Distanzelemente erfolgen.

Schließlich sieht eine vorteilhafte Ausgestaltung des Behältergreifers vor, dass der Behältergreifer ein Abstützelement mit zwei äußeren Abstützarmen zur Drehmomentabstützung und/oder zur winkelstabilen Festlegung des Behältergreifers aufweist, wobei die äußeren Abstützarme bevorzugt außenliegend zu dem oder den beiden Greiferfingern am Behältergreifer angeordnet sind und/oder das Abstützelement bevorzugt zwei Lagerhülsen zum winkelstabilen Anordnen des Abstützelements an den Lagerbolzen der Greiferfinger und dabei besonders bevorzugt an einer Oberseite der Greiferfinger anliegend aufweist. Dabei erstrecken sich die äußeren Abstützarme bevorzugt oberhalb der Greiferfinger und/oder zumindest abschnittsweise im Wesentlichen parallel zu jeweils einem Greiferfinger. Weiterhin bevorzugt sind die äußeren Abstützarme kürzer als die Greiferfinger gebildet, insbesondere derart, dass sich wenigstens die Greifabschnitte der Greiferfinger vollständig über die Enden der äußeren Abstützarme hinaus erstrecken. Weiterhin bevorzugt weisen die äußeren Abstützarme einen elastisch federnden Bereich auf, um bei einem Verdrehen des Behältergreifers und insbesondere der Greiferfinger den Lagerbolzen selbsttätig wieder in eine gerade Position zu bewegen. Dazu sind die äußeren Abstützarme bevorzugt im Bereich des einen Endes mit den Lagerhülsen an den Lagerbolzen und im Bereich des anderen Endes an einer Transportvorrichtung und insbesondere an einem Rahmenbauteil einer Transportvorrichtung abgestützt.

Das Festlegen der äußeren Abstützarme an einer Transportvorrichtung und insbesondere an dessen Rahmenbauteil kann grundsätzlich in beliebiger Weise erfolgen. Dabei kann vorgesehen sein, dass jeder der beiden äußeren Abstützarme, insbesondere im Bereich eines endständigen, freien Endes des äußeren Abstützarmes, ein Befestigungsabschnitt und dabei insbesondere eine Stützhülse zum Festlegen gegenüber einem, insbesondere an der Transportvorrichtung festgelegten Stützbolzen aufweist. Alternativ zu einer Stützhülse kann auch lediglich eine Abstützfläche oder eine beliebige andere, bevorzugt an die Form eines korrespondierenden Bauteils einer Transportvorrichtung angepasste Abstützkontur an den äußeren Abstützarmen vorgesehen sein. Jedoch ist eine form- und/oder kraftschlüssige Festlegung des Endes der Abstützarme an der Transportvorrichtung bevorzugt. Besonders bevorzugt erfolgt diese Festlegung jedoch derart, dass das Ende des äußeren Abstützarmes nach wie vor rotierbar, jedoch nicht translatierbar bzw. verschiebbar ist. Insbesondere bevorzugt ist das Abstützelement zwischen einer Oberfläche der Transportvorrichtung und einer Oberseite der Greiferfinger angeordnet und stützt somit zugleich die Greiferfinger ab.

Bevorzugt erfolgt ein Festlegen des Behältergreifers, besonders bevorzugt mit einem Abstützelement und ganz besonders bevorzugt dabei mit zwei äußeren Abstützarmen derart, dass ein Verschwenken des gesamten Behältergreifers, insbesondere gegenüber einer Transportvorrichtung möglich ist, was insbesondere im Crashfall besonders vorteilhaft ist. Entsprechend wird der Behältergreifer durch die Gestaltung der Höhenzentrierelemente zusammen mit dem Höhenführungselement bevorzugt kollisionsfrei. Weiterhin bevorzugt erfolgt das Festlegen derart, dass ein Verschwenken wenigstens bis zu 40° und besonders bevorzugt bis zu 50° gegenüber einer Normal- bzw. Gebrauchslage ermöglicht wird.

Ein Ausführungsbeispiel eines erfindungsgemäßen Behältergreifers wird nachstehend mit Bezug auf die Zeichnungen näher erläutert. Es zeigen:
- Fig. 1: eine schematische Seitenansicht eines Behältergreifers in einer Greifposition mit einem gehaltenen Behälter,
- Fig. 2: eine schematische Oberseitenansicht des in Fig. 1 dargestellten Behältergreifers,
- Fig. 3: eine vergrößerte, schematische Seitenansicht des in Fig. 1 dargestellten Behältergreifers in der Greifposition,
- Fig. 4: eine schematische Seitenansicht des in Fig. 1 dargestellten Behältergreifers in einer aufgrund einer Kollision seitlich ausgelenkten Position, und
- Fig. 5: eine schematische Oberseitenansicht des in Fig. 4 dargestellten, in einer ausgelenkten Position befindlichen Behältergreifers.

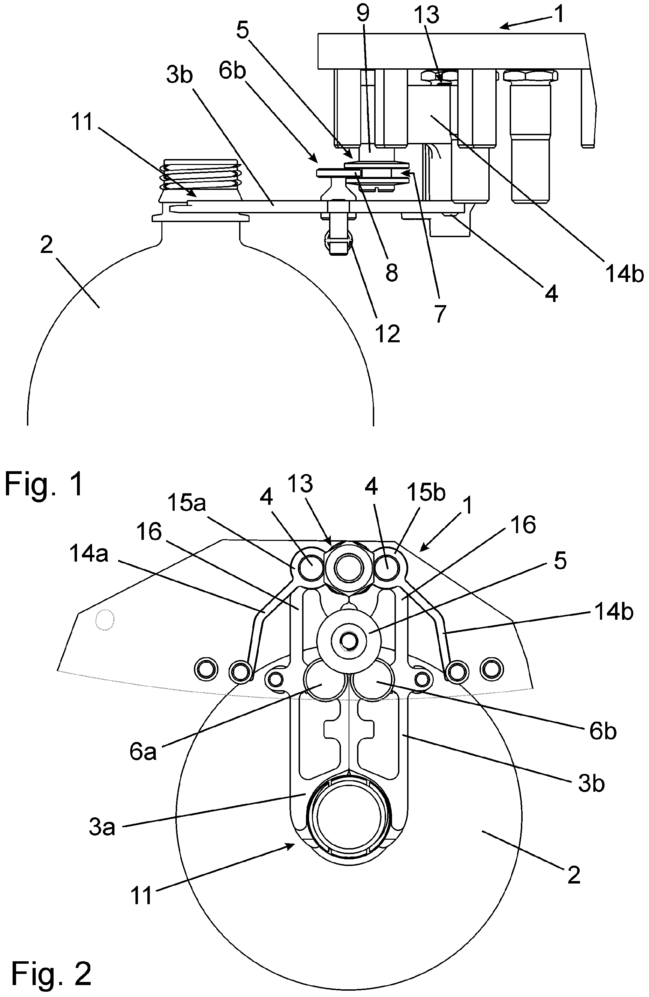

Ein in den Figuren 1 - 5 dargestellter Behältergreifer 1 weist zum Halten eines Behälters 2, nämlich einer PET-Kunststoffflasche für Getränke, zwei Greiferfinger 3a, 3b auf, die jeweils um einen Lagerbolzen 4 in einer gemeinsamen Ebene verschwenkbar festgelegt sind. Jeder der beiden Lagerbolzen 4 ist dabei an einem Abstützelement 13 innerhalb einer Lagerhülse 15a, 15b angeordnet, über das der Behältergreifer 1 an einer Sternplatte als Rahmenbauteil 21 einer Transportvorrichtung 20 und insbesondere eines Behältertransportsterns festgelegt ist.

Um sicherzustellen, dass die beiden Greiferfinger 3a, 3b ausschließlich innerhalb ihrer vorgegebenen Ebene verschwenken und sich dabei nicht aufgrund eines Höhenspiels der Lagerung um die Lagerbolzen 4 aus dieser Ebene abweichen, ist an dem Rahmenbauteil 21 in einem Bereich mittig zwischen den beiden Greiferfingern 3a, 3b ein Höhenführungselement 5 angeordnet. Dabei ist das Höhenführungselement 5 zum führenden und höhenzentrierenden Zusammenwirken mit jeweils einem an jedem der beiden Greiferfinger 3a, 3b angeordneten Höhenzentrierelement 6a, 6b vorgesehen.

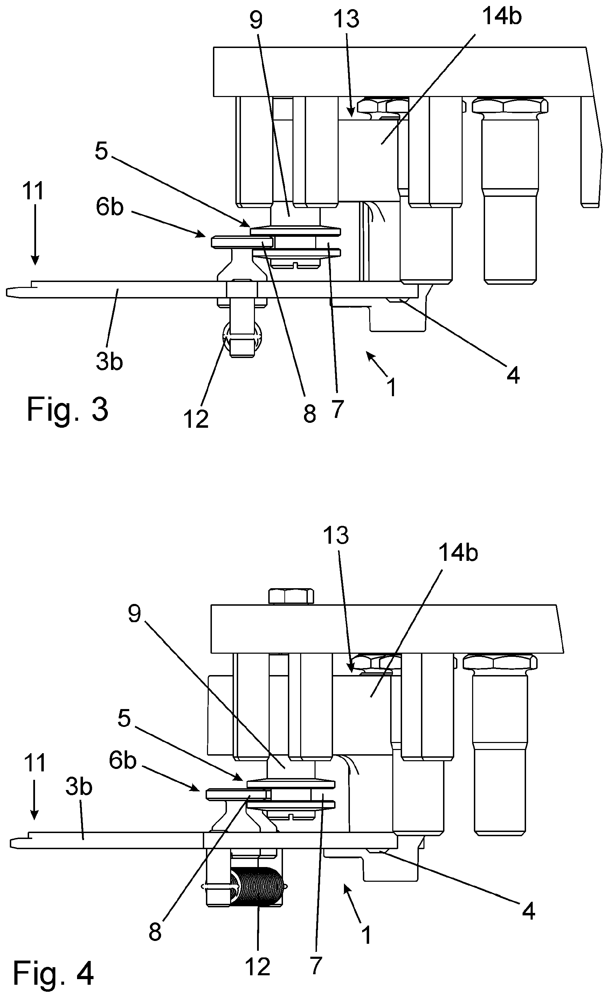

Damit das Höhenführungselement 5 in Bezug zu den Greiferfingern 3a, 3b bzw. zu den daran angeordneten Höhenzentrierelementen 6a, 6b in der richtigen Höhenlage angeordnet ist, erfolgt das Festlegen des Höhenführungselements 5 an dem Rahmenbauteil 21 der Transportvorrichtung 20 mittels eines Bolzenkörpers 9. Auch die Höhenzentrierelemente 6a, 6b sind über Haltebolzen 10 an einer Oberseite 16 der Greiferfinger 3a, 3b angeordnet, um in einer gemeinsamen Ebene mit dem Höhenführungselement 5 zusammenwirken zu können (siehe Fig. 1 und 3).

Dabei erfolgt wenigstens im Bereich einer Greifposition der beiden Greiferfinger 3a, 3b, in der ein Behälter 2 gegriffen werden kann, ein formschlüssiges Zusammenwirken des Höhenführungselements 5 und der Höhenzentrierelemente 6a, 6b in Bezug auf die Höhe, wobei das Höhenführungselement 5 eine sich über den gesamten Umfang erstreckende Führungsnut 7 aufweist, innerhalb der jeweils ein Führungsabschnitt 8 jedes der Höhenzentrierelemente 6a, 6b geführt verläuft, sodass die Greiferfinger 3a, 3b in einem Greifbereich 11 den Behälter 2 sich genau gegenüberliegend sowie exakt auf einer vorbestimmten Höhe greifen können (siehe Fig. 2).

Die vorliegende Ausführung des Behältergreifers 1 ist als passiver Greifer gebildet und weist daher ein die beiden Greiferfinger 3a, 3b unmittelbar verbindendes Federelement 12 auf, das als metallische Spiralfeder gebildet ist und die beiden Greiferfinger 3a, 3b auf die geschlossene Greifposition hin vorspannt, sodass ein in den Behältergreifer 1 hineinbewegter Behälter 2 selbsttätig gehalten wird.

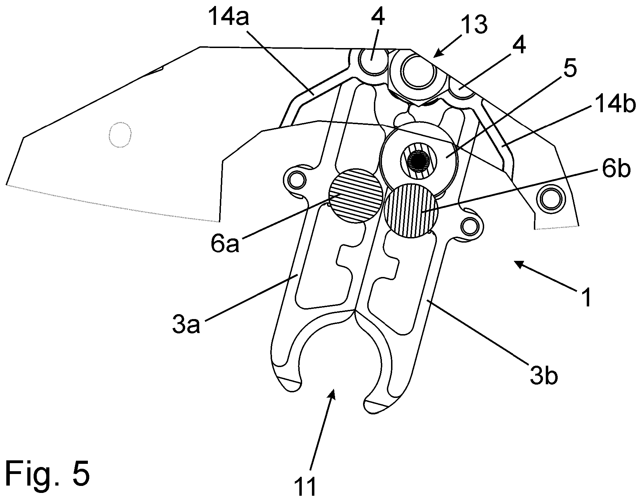

Schließlich ist an dem Abstützelement 13, das auch zum Festlegen des Behältergreifers 1 an einer Transportvorrichtung 20 genutzt wird, beidseitig und außenliegend zu den Greiferfingern 3a, 3b jeweils ein Abstützarm 14 a, b angeordnet, der an seinem außenständigen Ende jeweils an dem Rahmenbauteil 21 der Transportvorrichtung 20 abgestützt ist. Dadurch wirkt das Abstützelement 13 selbstzentrierend auf den Behältergreifer 1, sodass dieser, wenn er wie in den Fig. 4 und 5 dargestellt aus einer radial von der Transportvorrichtung 20 abstehenden Greiferposition, beispielsweise aufgrund einer Kollision mit einem weiteren Bauteil, ausgelenkt wird, aufgrund einer Federspannung der elastischen Abstützarme 14a, 14b wieder in seine Greiferposition zurück verschwenkt wird.

### Bezugszeichenliste

- 1: Behältergreifer
- 2: Behälter
- 3a, 3b: Greiferfinger
- 4: Lagerbolzen
- 5: Höhenführungselement
- 6a, 6b: Höhenzentrierelement
- 7: Führungsnut
- 8: Führungsabschnitt
- 9: Bolzenkörper
- 10: Haltebolzen
- 11: Greifbereich
- 12: Federelement
- 13: Abstützelement
- 14a, 14b: Abstützarm
- 15a, 15b: Lagerhülse
- 16: Oberseite der Greiferfinger
- 20: Transportvorrichtung
- 21: Rahmenbauteil

## Patentansprüche

1. Behältergreifer (1), insbesondere zum Transport von Behältern (2) und/oder zum Anordnen an einem Behältertransportstern, mit
- mindestens einem, bevorzugt zwei Greiferfingern (3a, 3b) zum Halten eines zu transportierenden Behälters (2),
- wenigstens einem Lagerbolzen (4) zur verschwenkbaren Lagerung des oder der Greiferfinger (3a, 3b) zwischen einer Greifposition zum Halten eines Behälters (2) und einer Freigabeposition zur Abgabe oder zur Aufnahme eines Behälters (2),
- einem ortsfest in Bezug zu dem Lagerbolzen (4) angeordneten Höhenführungselement (5), sowie
- einem an jedem Greiferfinger (3a, 3b) festgelegten Höhenzentrierelement (6a, 6b), wobei
- das Höhenführungselement (5) und das oder die Höhenzentrierelemente (6a, 6b) wenigstens im Bereich der Greifposition des oder der Greiferfinger (3a, 3b) derart führend zusammenwirken, dass ein Höhenspiel des Greiferfingers (3a, 3b) begrenzt wird.

2. Behältergreifer (1) nach Anspruch 1, **dadurch gekennzeichnet, dass** das Höhenführungselement (5) und die Höhenzentrierelemente (6a, 6b) formschlüssig zusammenwirken.

3. Behältergreifer (1) nach Anspruch 1 oder 2, **dadurch gekennzeichnet, dass** das Höhenführungselement (5) eine Führungsnut (7) aufweist, innerhalb der ein Führungsabschnitt (8) des Höhenzentrierelements (6a, 6b) jedes der Greiferfinger (3a, 3b), wenigstens in der Greifposition, angeordnet ist.

4. Behältergreifer (1) nach wenigstens einem der vorhergehenden Ansprüche, **dadurch gekennzeichnet, dass** das Höhenführungselement (5) an einem Bolzenkörper (9) zum beabstandeten Festlegen, insbesondere an einem Rahmenbauteil einer Transportvorrichtung, und/oder das Höhenzentrierelement (6a, 6b) an einem Haltebolzen (10) zum beabstandeten Festlegen an einem Greiferfinger (3a, 3b) angeordnet ist.

5. Behältergreifer (1) nach wenigstens einem der vorhergehenden Ansprüche, **dadurch gekennzeichnet, dass** das Höhenführungselement (5) und/oder das Höhenzentrierelement (6a, 6b) als Kreisscheibe oder als Kreisscheibenausschnitt gebildet ist und bevorzugt einen größeren Durchmesser als der Bolzenkörper (9) bzw. der Haltebolzen (10) aufweist und/oder sich bevorzugt über wenigstens 90°, besonders bevorzugt wenigstens 120° und ganz besonders bevorzugt über wenigstens 180° des Umfangs erstreckt.

6. Behältergreifer (1) nach wenigstens einem der vorhergehenden Ansprüche, **dadurch gekennzeichnet, dass** die beiden Höhenzentrierelemente (6a, 6b) über die gesamte Bewegungsbahn des jeweiligen Greiferfingers (3a, 3b) zwischen der Greifposition und der Freigabeposition zueinander parallel und/oder die beiden Höhenzentrierelemente (6a, 6b) und bevorzugt auch die Führungsnut (7) des Höhenführungselements (5) in einer gemeinsamen Ebene angeordnet sind.

7. Behältergreifer (1) nach wenigstens einem der vorhergehenden Ansprüche, **dadurch gekennzeichnet, dass** das Höhenführungselement (5) und die beiden Höhenzentrierelemente (6a, 6b) derart angeordnet und/oder derart gebildet sind, dass zwischen einer Greifposition und/oder einer im Wesentlichen parallelen Anordnung der beiden Greiferfinger (3a, 3b) zueinander und einer Verschwenkung der Greiferfinger auf die Freigabeposition zu zwischen 0° und 5° durchgängig ein Kontakt zwischen dem Höhenführungselement (5) und jedem der beiden Höhenzentrierelemente (6a, 6b) besteht.

8. Behältergreifer (1) nach wenigstens einem der vorhergehenden Ansprüche, **dadurch gekennzeichnet, dass** das Höhenzentrierelement (6a, 6b) im Wesentlichen mittig zwischen dem Lagerbolzen (4) und einem Greifbereich (11) des Greiferfingers (3a, 3b) zum Halten eines Behälters (2) angeordnet ist.

9. Behältergreifer (1) nach wenigstens einem der vorhergehenden Ansprüche, **dadurch gekennzeichnet, dass** das Höhenzentrierelement (6a, 6b) innerhalb einer Bohrung oder eines Langlochs in dem Greiferfinger (3a, 3b) festgelegt ist, wobei die Bohrung oder das Langloch bevorzugt radial oder tangential zu einem Drehpunkt des Greiferfingers (3a, 3b) um den Lagerbolzen (4) oder rechtwinklig zur Längsrichtung des Greiferfingers (3a, 3b) angeordnet ist.

10. Behältergreifer (1) nach wenigstens einem der vorhergehenden Ansprüche, **dadurch gekennzeichnet, dass** zwischen den beiden Greiferfingern (3a, 3b) ein auf die Greifstellung vorspannendes Federelement (12) vorgesehen ist, das bevorzugt an dem Greiferfinger (3a, 3b) jeweils gegenüberliegend zum Höhenzentrierelement (6a, 6b) angeordnet ist.

11. Behältergreifer (1) nach wenigstens einem der vorhergehenden Ansprüche, **dadurch gekennzeichnet, dass** der Behältergreifer (1) ein passiver Greifer ist, der durch ein Hineinbewegen und/oder Herausbewegen eines zu transportierenden Behälters (2) geöffnet wird.

12. Behältergreifer (1) nach wenigstens einem der vorhergehenden Ansprüche, **dadurch gekennzeichnet, dass** das Höhenführungselement (5) höhenverstellbar gebildet ist.

13. Behältergreifer (1) nach wenigstens einem der vorhergehenden Ansprüche, **dadurch gekennzeichnet, dass** der Behältergreifer (1) ein Abstützelement (13) mit zwei äußeren Abstützarmen (14a, 14b) zur Drehmomentabstützung und/oder zur winkelstabilen Festlegung des Behältergreifers (1) aufweist, wobei die äußeren Abstützarme (14a, 14b) bevorzugt außenliegend zu den beiden Greiferfingern (3a, 3b) am Behältergreifer (1) angeordnet sind und/oder das Abstützelement (13) bevorzugt zwei Lagerhülsen (15a, 15b) zum winkelstabilen Anordnen des Abstützelements (13) an den Lagerbolzen (4) der Greiferfinger (3a, 3b) und dabei besonders bevorzugt an einer Oberseite (16) der Greiferfinger (3a, 3b) anliegend aufweist.

14. Behälterbehandlungsanlage, insbesondere Behälterfüllanlage, mit
- einer Transportvorrichtung (20), insbesondere einem Behältertransportstern,
- mehreren, an der Transportvorrichtung (20) und insbesondere einem Rahmenbauteil (21) der Transportvorrichtung (20) festgelegten Behältergreifern (1) nach wenigstens einem der vorhergehenden Ansprüche, wobei
- jeweils ein Höhenführungselement (5) eines Behältergreifers (1) an der Transportvorrichtung (20) und bevorzugt unmittelbar an dem Rahmenbauteil festgelegt ist.
